# FASCICULE DE BREVET EUROPEEN

(11) **EP 3 648 926 B1**
(45) Date de publication et mention de la délivrance du brevet: **05.05.2021**
(21) Numéro de dépôt: 18752814.6
(22) Date de dépôt: 06.07.2018
(51) Int. Cl.: B23P 15/00, F01D 15/08, F16D 1/08, F01D 5/02, B23P 11/02, F04D 29/043, F04D 29/20, F04D 29/046

(54) **ENSEMBLE COMPRENANT UN ARBRE ET UN ELEMENT DESTINÉ À FORMER UN ROTOR ET PROCÉDÉ DE FABRICATION DUDIT ENSEMBLE**
ANORDNUNG AUS EINER WELLE UND EINEM ELEMENT ZUR BILDUNG EINES ROTORS UND HERSTELLUNGSVERFAHREN
ASSEMBLY OF A SHAFT AND AN ELEMENT INTENDED TO FORM A ROTOR AND MANUFACTURING METHOD

(30) Priorité: 07.07.2017 FR 1756426
(43) Date de publication de la demande: 13.05.2020
(73) Titulaire: ArianeGroup SAS, 75015 Paris (FR)
(72) Inventeur: FABBRI, Laurent, 27620 Gasny (FR); LEMAITRE, Alban, 78640 Saint Germain de la Grange (FR); NGUYEN DUC, Jean-Michel, 27700 Vezillon (FR)
(74) Mandataire: Cabinet Beau de Loménie
(86) Numéro de dépôt international: PCT/FR2018/051701
(87) Numéro de publication internationale: WO 2019/008294

(56) Documents cités:
- EP-A1- 0 161 081
- EP-A1- 1 873 356
- US-A- 3 715 176
- US-A- 4 497 612

## Description

### Arrière-plan de l'invention

Le présent exposé concerne un rotor pour machine tournante, notamment pour turbomachine, et un particulier un ensemble selon le préambule de la revendication 1. Un tel ensemble est décrit dans le document EP 1 873 356 A1.

Généralement, dans un rotor, différentes pièces mises en rotation sont assemblées sur un arbre et y sont couplées par frettage.

Cependant, lors de la mise en rotation du rotor, c'est-à-dire de l'arbre et des pièces frettées, la force centrifuge déforme les pièces vers l'extérieur selon une direction radiale. En conséquence, le couplage par frettage tend à diminuer avec l'augmentation de la vitesse de rotation du rotor.

On dimensionne donc le diamètre intérieur de la pièce en fonction de sa déformation maximale de sorte que le couplage par frettage puisse être maintenu à vitesse de rotation maximale du rotor, donc à vitesse de rotation élevée.

Le couplage par frettage entre l'arbre et la pièce est plus élevé au repos que lors de la rotation du rotor. On comprend donc que l'assemblage des pièces sur l'arbre est relativement compliqué car il faut vaincre le couplage par frettage entre l'arbre et la pièce au repos.

Il est donc difficile d'assembler plusieurs pièces sur un même arbre car plus il y a de pièces sur un même arbre, plus la pièce le plus loin d'une extrémité libre de l'arbre doit parcourir de chemin sur l'arbre pour être mise en place. En outre, il existe un risque que l'arbre puisse être partiellement endommagé lors du passage de chaque pièce.

On tient également compte des dispersions dans les dimensions des pièces à assembler, ce qui implique généralement de sur-dimensionner le frettage.

Typiquement, pour un rotor de turbomachine, le diamètre intérieur de la pièce à fretter sur l'arbre est environ 100 µm plus petit que le diamètre extérieur de l'arbre. Cela permet de garantir qu'à vitesse maximale de rotation du rotor, le frettage entre l'arbre et la pièce est maintenu.

Par ailleurs, les pièces frettées sont maintenues axialement sur l'arbre par des vis ou des tirants axiaux qui sont vissés dans l'arbre et qui reprennent les efforts axiaux. Ces efforts axiaux augmentent avec les efforts et les forces à appliquer pour fretter une pièce sur l'arbre. Ainsi, certains frettages peuvent produire des forces axiales qui peuvent difficilement être compensées par des tirants et/ou vis car ces derniers devraient alors avoir des dimensions qui ne sont pas compatibles avec le fonctionnement du rotor.

On cherche donc à faciliter le couplage de l'arbre et des pièces couplées à l'arbre par frettage.

### Objet et résumé de l'invention

Le présent exposé vise à remédier au moins en partie aux inconvénients cités ci-dessus.

A cet effet, le présent exposé concerne un ensemble comprenant un arbre s'étendant selon une direction axiale et un élément configuré pour être couplé sur l'arbre par frettage, l'arbre et l'élément étant destinés à former un rotor de turbomachine, l'arbre et l'élément comportant chacun une portion axiale de frettage, l'arbre comprenant une cavité interne dans la portion axiale de frettage, un diamètre intérieur de la cavité interne étant supérieur ou égal à 50% d'un diamètre extérieur de la portion axiale de frettage de l'arbre et une différence entre le diamètre extérieur de la portion axiale de frettage de l'arbre et un diamètre intérieur de la portion axiale de frettage de l'élément étant inférieure ou égale à 50 µm lorsque l'élément n'est pas couplé sur l'arbre, le diamètre extérieur de la portion axiale de frettage de l'arbre étant supérieur au diamètre intérieur de la portion axiale de frettage de l'élément.

Du fait de la présence d'une cavité interne de l'arbre dont le diamètre intérieur est supérieur ou égal à 50% du diamètre extérieur de la portion axiale de frettage de l'arbre, lorsque l'élément est couplé par frettage sur l'arbre et lors de la mise en rotation du rotor, dans la portion axiale de frettage de l'arbre, la paroi de l'arbre, définie entre le diamètre intérieur de la cavité interne et le diamètre extérieur de la portion axiale de frettage de l'arbre, peut se déformer vers l'extérieur selon une direction radiale et accompagner la déformation vers l'extérieur selon la direction radiale de l'élément. Ainsi, le frettage entre l'arbre et l'élément est maintenu, même à grande vitesse de rotation du rotor, par exemple à des vitesses de rotation pouvant atteindre 100 000 tours/minutes, voire plus.

La portion axiale de frettage de l'arbre pouvant se déformer radialement vers l'extérieur pendant la rotation du rotor, il est possible de réduire le frettage au repos des pièces les unes par rapport aux autres. Notamment, il est possible de réduire la différence entre le diamètre externe de la portion axiale de frettage de l'arbre et le diamètre interne de la portion axiale de frettage de l'élément lorsque l'élément n'est pas couplé par frettage sur l'arbre. Typiquement, cette différence peut être réduite à une valeur inférieure ou égale à 50 µm. Ainsi, avant que l'élément soit couplé sur l'arbre, le diamètre extérieur de la portion axiale de frettage de l'arbre est égal au diamètre intérieur de la portion axiale de frettage de l'élément auquel on a ajouté au maximum 50 µm. L'effort à exercer sur l'élément et l'arbre pour coupler par frettage l'élément sur l'arbre est donc réduit par rapport aux efforts à exercer lorsque l'arbre n'est pas creux ou que le diamètre intérieur de la cavité interne est inférieur à 50% du diamètre extérieur de la portion axiale de frettage de l'arbre.

Les efforts de frettage au repos étant moins importants, il est possible de coupler plus d'éléments par frettage sur un même arbre que ce qui est possible avec un arbre de l'état de la technique, pour un même niveau de serrage axial.

De plus, l'effort de serrage axial pour maintenir les éléments frettés sur l'arbre sont également réduits. Cela permet donc de réduire les efforts exercés sur les pièces permettant de réaliser le serrage axial, comme par exemple une vis ou un tirant.

Grâce à la présence de la cavité interne, on réduit également la masse du rotor et la quantité de matière utilisée.

La différence entre le diamètre extérieur de la portion axiale de frettage de l'arbre et le diamètre intérieur de la portion axiale de frettage de l'élément peut être inférieure ou égale à 40 µm lorsque l'élément n'est pas couplé sur l'arbre, de préférence inférieure ou égale à 30 µm, encore plus de préférence inférieure ou égale à 20 µm.

La cavité interne peut présenter une longueur dans la direction axiale qui est inférieure ou égale à une longueur de la portion axiale de frettage de l'arbre.

La cavité interne peut présenter une longueur dans la direction axiale qui est supérieure ou égale à une longueur de la portion axiale de frettage de l'arbre.

Le diamètre intérieur de la cavité interne peut varier dans la direction axiale.

Ainsi, le diamètre intérieur de la cavité interne peut ne pas être constant dans la cavité interne. Par exemple, dans la direction axiale, aux extrémités de la cavité interne, le diamètre intérieur de la cavité interne peut décroitre progressivement vers chaque extrémité de la cavité interne pour former des raccords arrondis, c'est-à-dire sans angle vif, et entre les extrémités, le diamètre intérieur de la cavité interne peut être constant.

Alternativement, le diamètre intérieur de la cavité peut varier dans la direction axiale tout le long de la cavité interne.

La cavité interne peut comporter un noyau central dont un diamètre extérieur est inférieur au diamètre intérieur de la cavité interne.

Ce noyau central et la cavité interne sont coaxiaux. Ainsi, le noyau central ne crée pas de balourd.

L'arbre peut comprendre une pluralité de raidisseurs reliant le noyau central à une paroi intérieure de la cavité interne, les raidisseurs de la pluralité de raidisseurs étant angulairement espacés les uns des autres de manière régulière.

Cela permet de passer d'avantage de couple entre l'arbre et l'élément configuré pour être couplé sur l'arbre de frettage, lorsque cet élément est couplé par frettage sur l'arbre de frettage. Cela permet également de rigidifier l'arbre.

L'élément peut être un premier élément, la portion axiale de frettage de l'arbre peut être une première portion axiale de frettage de l'arbre et la cavité interne peut être une première cavité interne, l'ensemble peut comprendre un deuxième élément configuré pour être couplé sur l'arbre par frettage, le deuxième élément comportant une portion axiale de frettage, l'arbre comprenant une deuxième cavité interne dans une deuxième portion axiale de frettage de l'arbre, un diamètre intérieur de la deuxième cavité interne étant supérieur ou égal à 50% d'un diamètre extérieur de la deuxième portion axiale de frettage de l'arbre et une différence entre le diamètre extérieur de la deuxième portion axiale de frettage de l'arbre et un diamètre intérieur de la portion axiale de frettage du deuxième élément étant inférieure ou égale à 50 µm lorsque le deuxième élément n'est pas couplé sur l'arbre, le diamètre extérieur de la deuxième portion axiale de frettage de l'arbre étant supérieur au diamètre intérieur de la portion axiale de frettage du deuxième élément.

La différence entre le diamètre extérieur de la deuxième portion axiale de frettage de l'arbre et le diamètre intérieur de la portion axiale de frettage du deuxième élément peut être inférieure ou égale à 40 µm lorsque l'élément n'est pas couplé sur l'arbre, de préférence inférieure ou égale à 30 µm, encore plus de préférence inférieure ou égale à 20 µm.

Le diamètre intérieur de la deuxième cavité interne peut être différent du diamètre intérieur de la première cavité interne.

La première cavité interne et la deuxième cavité interne peuvent être en communication fluidique.

L'arbre peut comporter une région de transition entre la première cavité interne et la deuxième cavité interne dans laquelle le diamètre varie progressivement du diamètre intérieur de la première cavité interne au diamètre intérieur de la deuxième cavité interne.

L'arbre peut comporter un trou borgne s'étendant selon la direction axiale, la première cavité interne et la deuxième cavité interne étant définies dans le trou borgne.

La première cavité interne peut être disposée entre une ouverture du trou borgne et la deuxième cavité interne et le diamètre intérieur de la première cavité interne peut être inférieur au diamètre intérieur de la deuxième cavité interne.

Le présent exposé concerne également un procédé de fabrication d'un ensemble tel que défini précédemment, l'arbre étant obtenu par fabrication additive.

Grâce à la fabrication additive, il est possible relativement aisément de fabriquer un arbre comprenant des cavités internes dont le diamètre intérieur varie. Il n'est en effet pas toujours facile de créer des cavités dans un arbre, que ce soit par usinage et/ou par moulage.

En particulier, il est possible de créer dans un trou borgne une première cavité interne disposée entre une ouverture du trou borgne et une deuxième cavité interne et le diamètre intérieur de la première cavité interne étant inférieur au diamètre intérieur de la deuxième cavité interne.

La fabrication additive permet également d'adapter chaque arbre en fonction des éléments qui seront couplés sur l'arbre par frettage. La fabrication additive permet également de fabriquer des arbres en petites quantités sans investissement financier lourd, comme la fabrication d'un moule spécifique.

La fabrication additive présente aussi l'avantage de réduire les dispersions dimensionnelles des pièces fabriquées par cette technique.

### Brève description des dessins

D'autres caractéristiques et avantages de l'invention ressortiront de la description suivante de modes de réalisation de l'invention, donnés à titre d'exemples non limitatifs, en référence aux figures annexées, sur lesquelles :
- la figure 1 est une vue schématique en coupe d'une pluralité d'éléments frettés sur un arbre selon un premier mode de réalisation ;
- la figure 2 est une vue schématique en section dans le plan de coupe II-II de la figure 1 ;
- la figure 3 est une vue schématique en coupe de la figure 1 avant couplage par frettage d'un élément sur l'arbre ;
- la figure 4 est une vue schématique en coupe d'une pluralité d'éléments frettés sur un arbre selon un deuxième mode de réalisation ;
- la figure 5 est une vue schématique en coupe d'une pluralité d'éléments frettés sur un arbre selon un deuxième mode de réalisation ;
- la figure 6 est une vue schématique en section dans le plan de coupe VI-VI de la figure 5 ;
- la figure 7 est une vue schématique en coupe d'une turbopompe ;
- la figure 8 est un ordinogramme représentant les étapes d'un procédé de fabrication du rotor des figures 1-7.

### Déscription détaillée de l'invention

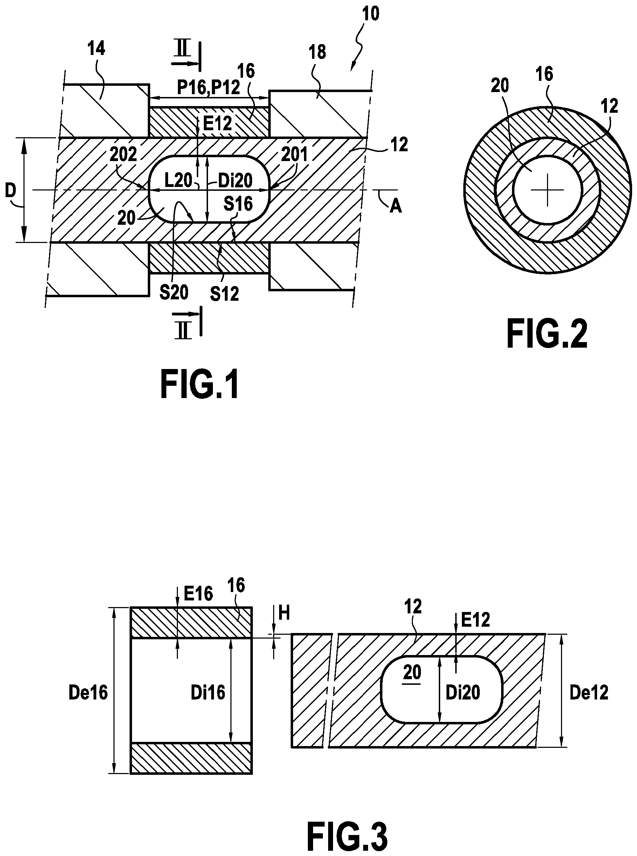

La figure 1 représente un rotor 10 comprenant un arbre 12 s'étendant selon un axe A, l'axe A définissant une direction axiale et une pluralité d'éléments 14, 16, 18 montés sur l'arbre 12.

L'élément 16 est couplé par frettage sur l'arbre 12. L'élément 16 comporte une portion axiale de frettage P16 qui correspond à la longueur de l'élément 16 dans la direction axiale A. Cette portion axiale de frettage P16 définit une surface de frettage S16 de l'élément 16.

L'arbre 12 comporte une portion axiale de frettage P12 qui correspond à la portion axiale de frettage P16 de l'élément 16. Cette portion axiale de frettage P12 définit une surface de frettage S12 de l'arbre 12. La surface de frettage S12 est de forme cylindrique.

La portion axiale de frettage P12 de l'arbre 12 comporte une cavité interne 20 de révolution autour de l'axe A. La cavité interne 20 est une cavité fermée, c'est-à-dire qu'elle ne comporte pas de partie communiquant avec l'extérieur de l'arbre 12. La cavité interne 20 présente un diamètre intérieur Di20 qui est supérieur à 50% du diamètre extérieur De12 de l'arbre 12.

Dans la direction axiale, la cavité interne 20 présente une longueur L20, qui dans cet exemple est égale à la longueur de la portion axiale de frettage P12 de l'arbre 12. Dans la direction axiale, en vue en coupe selon un plan axial, c'est-à-dire un plan comprenant l'axe A, la cavité interne 20 présente deux extrémités 201, 202 arrondies. Dans le mode de réalisation des figures 1 et 2, la cavité interne 20 ne comporte pas d'angle vif. Ainsi, le diamètre intérieur Di20 de la cavité interne 20 varie selon la direction axiale. En effet, aux extrémités 201, 202, le diamètre intérieur de la cavité interne 20 diminue afin de former les arrondis.

Bien que le diamètre intérieur de la cavité interne 20 ne soit pas constant, on comprend que le diamètre intérieur Di20 qui est pris en compte lors de la comparaison du diamètre intérieur Di20 avec le diamètre extérieur De12 de l'arbre n'est pas le diamètre intérieur des extrémités 201, 202 mais le diamètre intérieur Di20 de la portion cylindrique de la cavité interne 20.

La cavité interne 20 définit ainsi une paroi d'épaisseur E12. L'épaisseur E12 de la paroi de la portion axiale de frettage P12 de l'arbre 12 est inférieure ou égale à 25% du diamètre extérieur De12 de l'arbre 12.

Comme représenté sur la figure 2, la cavité interne 20, l'arbre 12 et l'élément 16 sont coaxiaux les uns par rapport aux autres autour de l'axe A.

Comme représenté sur la figure 3, avant assemblage de l'élément 16 avec l'arbre 12, l'élément 16 est un cylindre creux formé par deux surfaces cylindriques de section circulaire d'axe A commun. L'élément 16 présente un diamètre intérieur Di16 et un diamètre extérieur De16 et l'arbre 12 présente un diamètre extérieur De12, qui sont différents les uns des autres. Le diamètre extérieur De12 de l'arbre 12 est supérieur au diamètre intérieur Di16 de l'élément 16 afin d'assurer une force de couplage entre l'arbre 12 et l'élément 16 lorsque l'élément 16 est couplé par frettage sur l'arbre 12, c'est-à-dire que l'élément 16 est assemblé sur l'arbre 12 de sorte que la transmission de la rotation de l'arbre 12 à l'élément 16 est maintenue, à vitesse de rotation maximale en utilisation du rotor 10. Sur la figure 3, le diamètre extérieur De12 de l'arbre 12 est supérieur au diamètre intérieur Di16 de l'élément 16 d'une valeur H qui est égale à la différence entre le diamètre extérieur De12 de l'arbre 12 et le diamètre intérieur Di16 de l'élément 16. La différence H entre le diamètre extérieur De12 de l'arbre 12 et le diamètre intérieur Di16 de l'élément 16 est inférieure à 50 µm.

Comme représenté sur les figures 1 et 2, lorsque l'élément 16 est couplé par frettage sur l'arbre 12, le diamètre intérieur de l'élément 16 est égal au diamètre extérieur de l'arbre 12, et sont représentés sur la figure 1 par le diamètre D qui est compris entre le diamètre extérieur De12 de l'arbre 12 et le diamètre intérieur Di16 de l'élément 16.

Les éléments 14 et 18 peuvent également être couplés par frettage sur l'arbre 12. Ils peuvent aussi être montés coulissant ou libre en rotation par rapport à l'arbre 12.

Pour un matériau donné, la déformation d'un cylindre mis en rotation peut être calculée de manière connue. Cette déformation est principalement liée au coefficient de poisson, au module de Young et à la masse volumique du matériau. Il est ainsi possible de calculer pour un élément donné, dont on connait le matériau et la géométrie, en particulier l'épaisseur, la déformation de ce cylindre lorsqu'il est mis en rotation. A partir de cette déformation de l'élément à coupler par frettage, il est possible de déterminer la déformation souhaitée de la paroi de l'arbre 12 dans la portion axiale de frettage P12 de l'arbre 12 et donc l'épaisseur E12 de cette paroi, le matériau de l'arbre étant également connu. On peut ensuite déterminer la différence H entre le diamètre extérieur De12 de l'arbre 12 et le diamètre intérieur Di16 de l'élément 16 avant couplage pour garantir qu'à vitesse maximale de rotation du rotor 10, le couple puisse être transmis efficacement de l'arbre 12 à l'élément 16 grâce au couplage par frettage de l'élément 16 sur l'arbre 12. De manière classique, ces déformations tiennent également compte de la pression exercée par un cylindre sur l'autre, ici l'élément sur l'arbre et inversement. Ces déformations tiennent également compte des changements dimensionnels des pièces sous l'effet de changement de la température.

Dans ce qui suit, les éléments communs aux différents modes de réalisation sont identifiés par les mêmes références numériques.

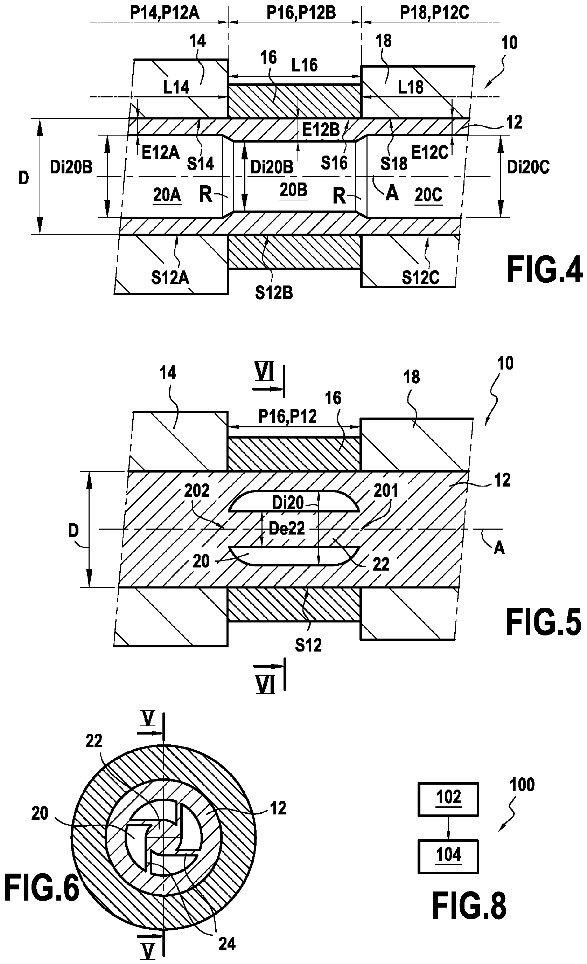

Le mode de réalisation de la figure 4 diffère de celui des figures 1-3 en ce que l'arbre 12 présente un premier élément 14, un deuxième élément 16 et un troisième élément 18, les trois éléments 14, 16, 18 étant couplés par frettage sur l'arbre 12, l'arbre 12 présentant trois portions de frettage P12A, P12B, P12C définissant chacune une surface de frettage S12A, S12B, S12C de forme cylindrique. Les portions de frettage P12A et P12B sont représentées partiellement sur la figure 4. La portion axiale de frettage P12A correspond à la portion de l'arbre sur laquelle le premier élément 14 est couplé par frettage sur l'arbre 12, la portion axiale de frettage P12B correspond à la portion de l'arbre sur laquelle le deuxième élément 16 est couplé par frettage sur l'arbre 12 et la portion axiale de frettage P12C correspond à la portion de l'arbre sur laquelle le troisième élément 18 est couplé par frettage sur l'arbre 12.

Le premier élément 14 présente une portion axiale de frettage P14 et définit une surface de frettage S14 du premier élément 14. Le premier élément 14 présente, dans la direction axiale, une longueur L14. La portion axiale de frettage P14 du premier élément est couplée par frettage sur la première portion axiale de frettage P12A de l'arbre 12.

La portion axiale de frettage P14 du premier élément peut présenter une longueur qui est inférieure ou égale à la longueur L14 du premier élément 14. Ainsi, le premier élément 14 peut être couplé par frettage sur l'arbre 12 sur toute la longueur L14 du premier élément 14 et la portion axiale de frettage P14 du premier élément 14 est présente sur toute la longueur L14 du premier élément 14. Le premier élément peut alternativement être couplé par frettage sur l'arbre 12 sur une longueur inférieure à la longueur L14 du premier élément 14. La portion axiale de frettage P14 du premier élément 14 est alors présente sur une partie de la longueur L14 du premier élément 14.

Le deuxième élément 16 présente une portion axiale de frettage P16 et définit une surface de frettage S16 du deuxième élément 16. Le deuxième élément 16 présente, dans la direction axiale, une longueur L16. La portion axiale de frettage P16 du deuxième élément 16 est couplée par frettage sur la deuxième portion axiale de frettage P12B de l'arbre 12. La portion axiale de frettage P16 du deuxième élément 16 est égale à la longueur L16 de l'élément 16.

Le troisième élément 18 présente une portion axiale de frettage P18 et définit une surface de frettage S18 du troisième élément 18. Le troisième élément 18 présente, dans la direction axiale, une longueur L18. La portion axiale de frettage P18 du troisième élément 18 est couplée par frettage sur la troisième portion axiale de frettage P12C de l'arbre 12.

La portion axiale de frettage P18 du troisième élément peut présenter une longueur qui est inférieure ou égale à la longueur L18 du troisième élément 18. Ainsi, le troisième élément 18 peut être couplé par frettage sur l'arbre 12 sur toute la longueur L18 du troisième élément 18 et la portion axiale de frettage P18 du troisième élément 18 est présente sur toute la longueur L18 du troisième élément 18. Le troisième élément peut alternativement être couplé par frettage sur l'arbre 12 sur une longueur inférieure à la longueur L18 du troisième élément 18. La portion axiale de frettage P18 du troisième élément 18 est alors présente sur une partie de la longueur L18 du troisième élément 18.

Lorsque les premier, deuxième et troisième éléments 14, 16, 18 sont couplés par frettage sur l'arbre 12, le diamètre extérieur de l'arbre 12 est égal aux diamètres intérieurs des premier, deuxième et troisième éléments 14, 16, 18, représentés par le diamètre D. Bien que le diamètre D puisse varier légèrement, c'est-à-dire d'une valeur inférieure à quelques microns, par exemple 5 µm, au droit des portions de frettage P14, P16, P18 des premier, deuxième et troisième éléments, par simplicité de représentation, ce diamètre a été représenté constant.

Avant assemblage des premier, deuxième et troisième éléments 14, 16, 18 sur l'arbre 12, l'arbre 12 présente un diamètre extérieur De12, qui dans ce mode de réalisation est constant.

De manière similaire au mode de réalisation des figures 1-3, avant assemblage sur l'arbre 12, chaque portion axiale de frettage P14, P16, P18 des éléments 14, 16, 18 présente un diamètre intérieur qui est inférieur au diamètre extérieur De12 de l'arbre 12, chaque différence entre le diamètre extérieur De12 de l'arbre 12 et le diamètre intérieur de chaque élément 14, 16, 18 étant inférieure à 50 µm.

Par ailleurs, on notera que les premier, deuxième et troisième éléments 14, 16, 18 présentent chacun un diamètre extérieur différent du diamètre extérieur des autres éléments. Bien entendu, les diamètres extérieurs respectifs de deux éléments à coupler par frettage sur un même arbre peuvent être égaux. Lorsqu'ils sont couplés par frettage sur l'arbre 12, les premier, deuxième et troisième éléments 14, 16, 18 sont disposés les uns derrière les autres dans la direction axiale. Dans la direction axiale, le deuxième élément 16 est en contact avec le premier élément 14 à une extrémité axiale du deuxième élément 16 et avec le troisième élément 18 à une extrémité axiale opposée à la première extrémité axiale du deuxième élément 16. Le deuxième élément 16 est donc disposé entre le premier élément 14 et le troisième élément 18.

Les différences entre le diamètre extérieur De12 de l'arbre 12 et le diamètre intérieur de chaque élément 14, 16, 18 peuvent être différentes les unes des autres, tout en étant chacune inférieure à 50 µm. En effet, ces différences dépendent notamment, comme cela a été expliqué ci-avant, du matériau de chaque élément 14, 16, 18, de l'épaisseur de chaque élément 14, 16, 18 dans la portion axiale de frettage P14, P16, P18 respectivement et de l'arbre 12. Ces différences peuvent également dépendre de la forme de l'élément couplé par frettage.

Dans les première, deuxième et troisième portions de frettage P12A, P12B, P12C de l'arbre 12, l'arbre 12 comporte respectivement des première, deuxième et troisième cavités internes 20A, 20B, 20C. Les première, deuxième et troisième cavités internes 20A, 20B, 20C sont des de révolution autour de l'axe A. Comme représenté sur la figure 4, la première cavité interne 20A, l'arbre 12 et le premier élément 14 sont coaxiaux les uns par rapport aux autres autour de l'axe A. De même, la deuxième cavité interne 20B, l'arbre 12 et le deuxième élément 16 sont coaxiaux les uns par rapport aux autres autour de l'axe A et la troisième cavité interne 20B, l'arbre 12 et le troisième élément 18 sont coaxiaux les uns par rapport aux autres autour de l'axe A.

La première cavité interne 20A présente un premier diamètre intérieur Di20A, la deuxième cavité interne 20B présente un deuxième diamètre intérieur Di20B et la troisième cavité interne 20C présente un troisième diamètre intérieur Di20C. Les premier, deuxième et troisième diamètres intérieurs Di20A, Di20B, Di20C peuvent être différents les uns des autres. Chacun des premier, deuxième et troisième diamètres intérieurs Di20A, Di20B, Di20C est supérieur ou égal à 50% du diamètre extérieur Di12 de l'arbre 12 avant couplage par frettage des premier, deuxième et troisième éléments 14, 16, 18 sur l'arbre 12. Sur la figure 4, le premier diamètre intérieur Di20A est égal au troisième diamètre Di20C et le deuxième diamètre intérieur Di20B est inférieur au premier et au deuxième diamètre intérieur Di20A, Di20C.

La première cavité interne 20A est en communication fluidique avec la deuxième cavité interne 20B et la deuxième cavité interne 20B est également en communication fluidique avec la cavité interne 20C. La deuxième cavité interne 20B est disposée entre la première cavité interne 20A et la troisième cavité interne 20C.

Entre la première cavité interne 20A et la deuxième cavité interne 20B, le diamètre intérieur varie de manière progressive entre le premier diamètre intérieur Di20A et le deuxième diamètre intérieur Di20B en formant un raccord R entre la première cavité interne 20A et la deuxième cavité interne 20B.

De manière similaire, entre la deuxième cavité interne 20B et la troisième cavité interne 20C, le diamètre intérieur varie de manière progressive entre le deuxième diamètre intérieur Di20B et le troisième diamètre intérieur Di20C en formant un raccord R entre la deuxième cavité interne 20B et la troisième cavité interne 20C.

Ces raccords R permettent une transition progressive entre deux cavités internes de diamètres intérieurs différents, sans toutefois présenter d'angle à 90° entre les deux cavités. En effet, des angles à 90° peuvent être un point de concentration des tensions dans l'arbre 12.

Les première, deuxième et troisième cavités internes 20A, 20B, 20C définissent respectivement des première, deuxième et troisième parois d'épaisseur E12A, E12B et E12C de l'arbre 12. Chaque première, deuxième et troisième épaisseur E12A, E12B et E12C respectivement de la paroi de la portion axiale de frettage P12A, P12B et P12C de l'arbre 12 est inférieure ou égale à 25% du diamètre extérieur De12 de l'arbre 12.

Le mode de réalisation de la figure 5 diffère de celui des figures 1-3 en ce que l'arbre 12 présente dans la cavité 20 un noyau central 22. Ce noyau central 22 permet de rigidifier la structure de l'arbre 12 dans la portion axiale de frettage P12. Le noyau central 22 présente un diamètre extérieur De22 qui est inférieur au diamètre intérieur Di20 de la cavité interne 20.

Comme représenté sur la figure 6, l'arbre 12 peut comporter une pluralité de raidisseurs 24 qui relient le noyau central 22 à une paroi intérieur S20 de la cavité interne 20. Les raidisseurs 24 de la pluralité de raidisseurs sont angulairement espacés les uns des autres de manière régulière. Dans le mode de réalisation de la figure 6, les raidisseurs 24 sont au nombre de quatre.

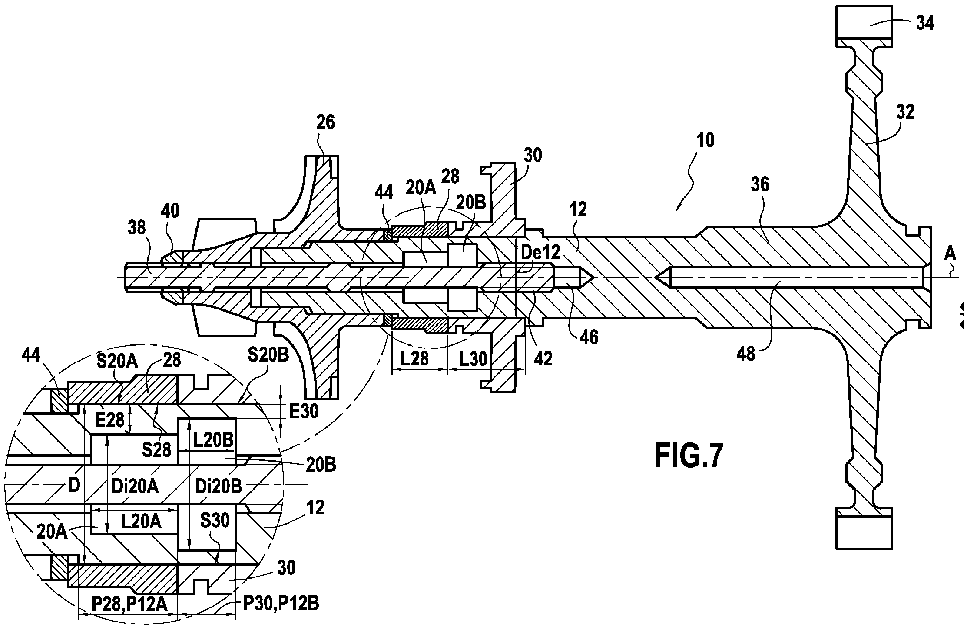

Dans le mode de réalisation de la figure 7, le rotor 10 est une turbopompe, par exemple pour une machine cryogénique spatiale tournant à grande vitesse, par exemple 100 000 tours/minutes.

En parcourant la turbopompe dans la direction axiale de la gauche vers la droite de la figure 7, la turbopompe comporte un arbre 12, d'axe de symétrie et de rotation A, sur lequel sont assemblés une roue de pompe 26, une bague 44, un palier de roulement 28, un plateau d'équilibrage 30, d'un palier à feuilles 36 et d'une turbine 32 comportant des ailettes 34. Dans ce mode de réalisation, l'arbre 12 est un arbre qui d'un seul tenant avec la turbine aubagée monobloc, c'est-à-dire, que la turbine aubagée monobloc et l'arbre 12 ne forment qu'une seul pièce. On comprend que la turbine 32 pourrait ne pas être d'une seule pièce avec l'arbre 12 et pourrait par exemple être couplée par frettage sur l'arbre 12. La turbopompe pourrait comporter un palier fluide au lieu d'un palier à feuilles 36.

La turbopompe comporte également un premier trou borgne 46 disposé du côté de la roue de pompe 26 et un deuxième trou borgnes 48 disposé du côté de la turbine 32. Les premier et deuxième trous borgnes 46, 48 s'étendent selon la direction axiale et sont coaxiaux avec l'arbre 12.

La roue de pompe 26, la bague 44, le palier de roulement 28 et le plateau d'équilibrage 30 forment un empilement maintenu dans la direction axiale sur l'arbre 12 par un tirant 38 fixé dans le premier trou borgne 46 par un taraudage 42 et un écrou 40. La roue de pompe 26, la bague 44, le palier de roulement 28 et le plateau d'équilibrage 30 sont coaxiaux avec l'arbre 12.

Le palier de roulement 28 forme un premier élément au sens de l'exposé et le plateau d'équilibrage 30 forme un deuxième élément au sens de l'exposé. Dans la direction axiale, le palier de roulement 28 présente une longueur L28 et le plateau d'équilibrage 30 présente une longueur L30. Le palier de roulement 28 présente une portion axiale de frettage P28 du palier de roulement 28 sur l'arbre 12 définissant une surface de frettage S28 du palier de roulement 28 et le plateau d'équilibrage 30 présente une portion axiale de frettage P30 du plateau d'équilibrage 30 définissant une surface de frettage S30 du plateau d'équilibrage 30.

Dans le mode de réalisation de la figure 7, dans la direction axiale, la longueur de la portion axiale de frettage P28 du palier de roulement 28 est inférieure à la longueur L28 du palier de roulement 28. De même, la longueur de la portion axiale de frettage P30 du plateau d'équilibrage 30 est inférieure à la longueur L30 du plateau d'équilibrage 30.

Avant couplage par frettage des éléments sur l'arbre 12, l'arbre 12 comporte une première cavité interne 20A disposée dans une première portion axiale de frettage P12A de l'arbre 12 correspondant à la portion axiale de frettage P28 du palier de roulement 28 et une deuxième cavité interne 20B disposée dans une deuxième portion axiale de frettage P12B de l'arbre 12 correspondant à la portion axiale de frettage P30 du plateau d'équilibrage 30. Dans les première et deuxième portions axiales de frettage P12A, P12B, avant couplage par frettage des éléments sur l'arbre 12, l'arbre 12 présente un diamètre extérieur De12. Dans le mode de réalisation de la figure 7, le diamètre extérieur De12 est constant et est égal au diamètre de l'arbre 12 entre les premier et deuxième trous borgnes 46, 48.

De manière similaire au mode de réalisation des figures 1-3, avant assemblage sur l'arbre 12, les première et deuxième portions axiales de frettage P28, P30 présentent un diamètre intérieur qui est inférieur au diamètre extérieur De12 de l'arbre 12, chaque différence entre le diamètre extérieur De12 de l'arbre 12 et le diamètre intérieur du palier de roulement 28 et du plateau d'équilibrage 30 étant inférieure à 50 µm.

Lorsque le palier de roulement 28 et le plateau d'équilibrage 30 sont assemblés sur l'arbre 12, c'est-à-dire couplés par frettage sur l'arbre 12, le diamètre extérieur de l'arbre 12 est égal aux diamètres intérieurs du palier de roulement 28 et du plateau d'équilibrage, représentés par le diamètre D sur la figure 7.

Les différences entre le diamètre extérieur De12 de l'arbre 12 et le diamètre intérieur du palier de roulement 28 et du plateau d'équilibrage 30 peuvent être différentes les unes des autres, tout en étant chacune inférieure à 50 µm. En effet, ces différences dépendent notamment, comme cela a été expliqué ci-avant, du matériau de chaque élément, de l'épaisseur de chaque élément dans les première et deuxième portions axiales de frettage P28, P30 respectivement et de l'arbre 12.

Les première et deuxième cavités internes 20A, 20B sont définies dans le premier trou borgne 46. La première portion axiale de frettage P12A de l'arbre 12 définit une première surface de frettage S12A de l'arbre 12. La deuxième portion axiale de frettage P12A de l'arbre 12 définit une deuxième surface de frettage S12B de l'arbre 12. Les première et deuxième surfaces de frettage S12A, S12B sont de forme cylindrique.

La première cavité interne 20A présente un premier diamètre intérieur Di20A et une première longueur L20A et la deuxième cavité interne 20B présente un deuxième diamètre intérieur Di20B et une deuxième longueur L20B. Dans le mode de réalisation de la figure 7, le premier diamètre intérieur Di20A est inférieur au deuxième diamètre intérieur Di20B. Par ailleurs, le premier diamètre intérieur Di20A et le deuxième diamètre intérieur Di20B sont supérieurs à 50% du diamètre extérieur De12 de l'arbre 12 dans les première et deuxième portions de frettage P12A, P12B de l'arbre 12.

On constate que dans le premier trou borgne 46, la première cavité interne 20A, de premier diamètre intérieur Di20A inférieur au deuxième diamètre intérieur Di20B de la deuxième cavité interne 20B, est disposée entre une ouverture du premier trou borgne 46 et la deuxième cavité interne 20B.

Par ailleurs, on notera que dans le mode de réalisation de la figure 7, la première longueur L20A de la première cavité interne 20A est inférieure à la longueur de la portion axiale de frettage P12A de l'arbre 12 et que la deuxième longueur L20B de la deuxième cavité interne 20B est égale à la longueur de la portion axiale de frettage P12B.

Dans la première portion axiale de frettage P12A de l'arbre 12, le premier diamètre intérieur Di20A de la première cavité interne 20A et le diamètre extérieur De12 de la première portion axiale de frettage P12A de l'arbre 12 définissent une paroi de l'arbre 12 d'épaisseur E28. Dans la deuxième portion axiale de frettage P12B de l'arbre 12, le deuxième diamètre intérieur Di20B de la deuxième cavité interne 20B et le diamètre extérieur De12 de la deuxième portion axiale de frettage P12B de l'arbre 12 définissent une paroi de l'arbre 12 d'épaisseur E30.

Par exemple, le diamètre extérieur De12 de l'arbre 12 pourrait être de 25 mm (millimètre). On peut envisager de réaliser l'arbre 12 et le plateau 30 en superalliage à base de titane, par exemple du T16Al4V, le roulement 28 peut être réalisé en acier inoxydable, par exemple la nuance 440C.

On va maintenant décrire le procédé de fabrication 100 d'un rotor 10. Pour fabriquer le rotor 10, on fabrique 102 tout d'abord un ensemble comprenant un arbre 12 par fabrication additive et un au moins un élément 14, 16, 18, 28, 30 par toute technique connue et appropriée. Ensuite, on couple 102 par frettage l'élément 14, 16, 18, 28, 30 sur l'arbre 12. On comprend qu'en fonction du nombre d'éléments à coupler sur l'arbre 12, l'étape 102 de couplage de l'élément sur l'arbre peut être répétée autant de fois qu'il y a d'éléments à coupler par frettage.

Différents procédés de fabrication additive peuvent avantageusement être utilisés.

Par exemple, un procédé de fusion sélective par laser sur un lit de poudre peut être utilisé.

La mise en œuvre de procédés de fabrication additive est connue.

Lorsque l'on utilise un procédé de fusion sélective sur lit de poudre et lorsque la cavité 20 est une cavité fermée, lors de l'étape de fabrication additive, au moins un orifice est ménagé afin de vider la cavité de la poudre non frittée qu'elle contient. Une étape est ensuite prévue afin de fermer cet orifice.

Quoique le présent exposé ait été décrit en se référant à des exemples de réalisation spécifiques, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Ensemble comprenant un arbre (12) s'étendant selon une direction axiale et un élément (14, 16, 18, 28, 30) configuré pour être couplé sur l'arbre (12) par frettage, l'arbre (12) et l'élément (14, 16, 18, 28, 30) étant destinés à former un rotor (10) de turbomachine, l'arbre (12) et l'élément (14, 16, 18, 28, 30) comportant chacun une portion axiale de frettage (P12, P12A, P12B, P12C, P14, P16, P18, P28, P30), l'arbre (12) comprenant une cavité interne (20, 20A, 20B, 20C) dans la portion axiale de frettage (P12, P12A, P12B, P12C), un diamètre intérieur (Di20, Di20A, Di20B, Di20C) de la cavité interne (20, 20A, 20B, 20C) étant supérieur ou égal à 50% d'un diamètre extérieur (De12) de la portion axiale de frettage (P12, P12A, P12B, P12C) de l'arbre (12) **caractérisé en ce que** une différence (H) entre le diamètre extérieur (De12) de la portion axiale de frettage (P12, P12A, P12B, P12C) de l'arbre (12) et un diamètre intérieur (Di16) de la portion axiale de frettage (P14, P16, P18, P28, P30) de l'élément (14, 16, 18, 28, 30) est inférieure ou égale à 50 µm lorsque l'élément (14, 16, 18, 28, 30) n'est pas couplé sur l'arbre (12), le diamètre extérieur (De12) de la portion axiale de frettage (P12, P12A, P12B, P12C) de l'arbre (12) étant supérieur au diamètre intérieur (Di16) de la portion axiale de frettage (P14, P16, P18, P28, P30) de l'élément (14, 16, 18, 28, 30).

2. Ensemble selon la revendication 1, dans lequel la cavité interne (20, 20A, 20B, 20C) présente une longueur dans la direction axiale qui est supérieure ou égale à une longueur de la portion axiale de frettage (P12, P12A, P12B, P12C) de l'arbre (12).

3. Ensemble selon la revendication 1 ou 2, dans lequel le diamètre intérieur (Di20, Di20A, Di20B, Di20C) de la cavité interne (20, 20A, 20B, 20C) varie dans la direction axiale.

4. Ensemble selon l'une quelconque des revendications 1 à 3, dans lequel la cavité interne (20) comporte un noyau central (22) dont un diamètre extérieur (De22) est inférieur au diamètre intérieur (Di20) de la cavité interne (20).

5. Ensemble selon la revendication 4, comprenant une pluralité de raidisseurs (24) reliant le noyau central (22) à une paroi intérieure de la cavité interne (20), les raidisseurs (24) de la pluralité de raidisseurs étant angulairement espacés les uns des autres de manière régulière.

6. Ensemble selon l'une quelconque des revendications 1 à 5, dans lequel l'élément est un premier élément (14, 28), la portion axiale de frettage de l'arbre est une première portion axiale de frettage de l'arbre (P12A) et la cavité interne est une première cavité interne (20A), l'ensemble comprenant un deuxième élément (16, 18, 30) configuré pour être couplé sur l'arbre (12) par frettage, le deuxième élément (16, 18, 30) comportant une portion axiale de frettage (P16, P18, P30), l'arbre (12) comprenant une deuxième cavité interne (20B, 20C) dans une deuxième portion axiale de frettage (P12B, P12C) de l'arbre (12), un diamètre intérieur (Di20B, Di20C) de la deuxième cavité interne (20B, 20C) étant supérieur ou égal à 50% d'un diamètre extérieur (De12) de la deuxième portion axiale de frettage (P12B, P12C) de l'arbre (12) et une différence entre le diamètre extérieur (De12) de la deuxième portion axiale de frettage (P12B, P12C) de l'arbre (12) et un diamètre intérieur de la portion axiale de frettage (P16, P18, P30) du deuxième élément (16, 18, 30) étant inférieure ou égale à 50 µm lorsque le deuxième élément (16, 18, 30) n'est pas couplé sur l'arbre (12), le diamètre extérieur de la deuxième portion axiale de frettage (De12) de l'arbre (12) étant supérieur au diamètre intérieur de la portion axiale de frettage (P16, P18, P30) du deuxième élément (16, 18, 30).

7. Ensemble selon la revendication 6, dans lequel le diamètre intérieur (Di20B, Di20C) de la deuxième cavité interne (20B, 20C) est différent du diamètre intérieur (Di20A) de la première cavité interne (20A).

8. Ensemble selon la revendication 7, dans lequel la première cavité interne (20A) et la deuxième cavité interne (20B, 20C) sont en communication fluidique et l'arbre (12) comporte une région de transition (R) entre la première cavité interne (20A) et la deuxième cavité interne (20B, 20C) dans laquelle le diamètre varie progressivement du diamètre intérieur (Di20A) de la première cavité interne (20A) au diamètre intérieur (Di20B, Di20C) de la deuxième cavité interne (20B, 20C).

9. Ensemble selon la revendication 7 ou 8, dans lequel l'arbre (12) comporte un trou borgne (46) s'étendant selon la direction axiale, la première cavité interne (20A) et la deuxième cavité interne (20B) étant définies dans le trou borgne (46), la première cavité interne (20A) étant disposée entre une ouverture du trou borgne (46) et la deuxième cavité interne (20B) et le diamètre intérieur (Di20A) de la première cavité interne (20A) étant inférieur au diamètre intérieur (Di20B) de la deuxième cavité interne (20B).

10. Procédé de fabrication d'un ensemble selon l'une quelconque des revendications 1 à 9, l'arbre (12) étant obtenu par fabrication additive.

## Patentansprüche

1. Anordnung, umfassend eine Welle (12), die sich in einer axialen Richtung erstreckt, und ein Element (14, 16, 18, 28, 30), das konfiguriert ist, um mit der Welle (12) durch Schrumpfsitz gekoppelt zu werden, wobei die Welle (12) und das Element (14, 16, 18, 28, 30) dazu bestimmt sind, einen Rotor (10) einer Turbomaschine zu bilden, und die Welle (12) und das Element (14, 16, 18, 28, 30) jeweils einen axialen Schrumpfabschnitt (P12, P12A, P12B, P12C, P14, P16, P18, P28, P30) aufweisen,
wobei die Welle (12) einen inneren Hohlraum (20, 20A, 20B, 20C) in dem axialen Schrumpfabschnitt (P12, P12A, P12B, P12C) aufweist und ein Innendurchmesser (Di20, Di20A, Di20B, Di20C) des inneren Hohlraums (20, 20A, 20B, 20C) größer oder gleich 50 % eines Außendurchmessers (De12) des axialen Schrumpfabschnitts (P12, P12A, P12B, P12C) der Welle (12) ist,
**dadurch gekennzeichnet, dass** eine Differenz (H) zwischen dem Außendurchmesser (De12) des axialen Schrumpfabschnitts (P12, P12A, P12B, P12C) der Welle (12) und einem Innendurchmesser (Di16) des axialen Schrumpfabschnitts (P14, P16, P18, P28, P30) des Elements (14, 16, 18, 28, 30) 50 µm oder weniger beträgt, wenn das Element (14, 16, 18, 28, 30) nicht mit der Welle (12) gekoppelt ist, wobei der Außendurchmesser (De12) des axialen Schrumpfabschnitts (P12, P12A, P12B, P12C) der Welle (12) größer als der Innendurchmesser (Di16) des axialen Schrumpfabschnitts (P14, P16, P18, P28, P30) des Elements (14, 16, 18, 28, 30) ist.

2. Anordnung nach Anspruch 1, wobei der innere Hohlraum (20, 20A, 20B, 20C) eine Länge in axialer Richtung aufweist, die größer oder gleich einer Länge des axialen Schrumpfabschnitts (P12, P12A, P12B, P12C) der Welle (12) ist.

3. Anordnung nach Anspruch 1 oder 2, wobei der Innendurchmesser (Di20, Di20A, Di20B, Di20C) des inneren Hohlraums (20, 20A, 20B, 20C) in axialer Richtung variiert.

4. Anordnung nach einem der Ansprüche 1 bis 3, wobei der innere Hohlraum (20) einen zentralen Kern (22) aufweist, dessen Außendurchmesser (De22) kleiner ist als der Innendurchmesser (Di20) des inneren Hohlraums (20).

5. Anordnung nach Anspruch 4, umfassend eine Mehrzahl von Versteifungselementen (24), die den zentralen Kern (22) mit einer Innenwand des inneren Hohlraums (20) verbinden, wobei die Versteifungselemente (24) der Mehrzahl von Versteifungselementen in regelmäßigem Winkelabstand zueinander angeordnet sind.

6. Anordnung nach einem der Ansprüche 1 bis 5, wobei es sich bei dem Element um ein erstes Element (14, 28), bei dem axialen Schrumpfabschnitt der Welle um einen ersten axialen Schrumpfabschnitt der Welle (P12A) und bei dem inneren Hohlraum um einen ersten inneren Hohlraum (20A) handelt, wobei die Anordnung ein zweites Element (16, 18, 30) umfasst, das konfiguriert ist, um mit der Welle (12) durch Schrumpfsitz gekoppelt zu werden, wobei das zweite Element (16, 18, 30) einen axialen Schrumpfabschnitt (P16, P18, P30) aufweist, die Welle (12) einen zweiten inneren Hohlraum (20B, 20C) in einem zweiten axialen Schrumpfabschnitt (P12B, P12C) der Welle (12) aufweist, ein Innendurchmesser (Di20B, Di20C) des zweiten inneren Hohlraums (20B, 20C) größer oder gleich 50 % eines Außendurchmessers (De12) des zweiten axialen Schrumpfabschnitts (P12B, P12C) der Welle (12) ist und eine Differenz zwischen dem Außendurchmesser (De12) des zweiten axialen Schrumpfabschnitts (P12B, P12C) der Welle (12) und einem Innendurchmesser des axialen Schrumpfabschnitts (P16, P18, P30) des zweiten Elements (16, 18, 30) kleiner oder gleich 50 µm oder weniger beträgt, wenn das zweite Element (16, 18, 30) nicht mit der Welle (12) gekoppelt ist, wobei der Außendurchmesser des zweiten axialen Schrumpfabschnitts (De12) der Welle (12) größer als der Innendurchmesser des axialen Schrumpfabschnitts (P16, P18, P30) des zweiten Elements (16, 18, 30) ist.

7. Anordnung nach Anspruch 6, wobei der Innendurchmesser (Di20B, Di20C) des zweiten inneren Hohlraums (20B, 20C) sich von dem Innendurchmesser (Di20A) des ersten inneren Hohlraums (20A) unterscheidet.

8. Anordnung nach Anspruch 7, wobei der erste innere Hohlraum (20A) und der zweite innere Hohlraum (20B, 20C) in Fluidverbindung stehen und die Welle (12) einen Übergangsbereich (R) zwischen dem ersten inneren Hohlraum (20A) und dem zweiten inneren Hohlraum (20B, 20C) aufweist, in dem sich der Durchmesser allmählich vom Innendurchmesser (Di20A) des ersten inneren Hohlraums (20A) zum Innendurchmesser (Di20B, Di20C) des zweiten inneren Hohlraums (20B, 20C) ändert.

9. Anordnung nach Anspruch 7 oder 8, wobei die Welle (12) ein sich in axialer Richtung erstreckendes Sackloch (46) aufweist, der erste innere Hohlraum (20A) und der zweite innere Hohlraum (20B) in dem Sackloch (46) definiert sind, der erste innere Hohlraum (20A) zwischen einer Öffnung des Sacklochs (46) und dem zweiten inneren Hohlraum (20B) angeordnet ist und der Innendurchmesser (Di20A) des ersten inneren Hohlraums (20A) kleiner ist als der Innendurchmesser (Di20B) des zweiten inneren Hohlraums (20B).

10. Herstellungsverfahren für eine Anordnung nach einem der Ansprüche 1 bis 9, wobei die Welle (12) durch additive Fertigung hergestellt wird.

## Claims

1. An assembly comprising a shaft (12) extending along an axial direction and an element (14, 16, 18, 28, 30) configured to be coupled to the shaft (12) by shrink-fitting, the shaft (12) and the element (14, 16, 18, 28, 30) being intended to form a rotor (10) of a turbomachine, the shaft (12) and the element (14, 16, 18, 28, 30) each including an axial shrink-fitting portion (P12, P12A, P12B, P12C, P14, P16, P18, P28, P30), the shaft (12) comprising an inner cavity (20, 20A, 20B, 20C) in the axial shrink-fitting portion (P12, P12A, P12B, P12C), an internal diameter (Di20, Di20A, Di20B, Di20C) of the inner cavity (20, 20A, 20B, 20C) being greater than or equal to 50% of an external diameter (De12) of the axial shrink-fitting portion (P12, P12A, P12B, P12C) of the shaft (12),
**characterized in that** a difference (H) between the external diameter (De12) of the axial shrink-fitting portion (P12, P12A, P12B, P12C) of the shaft (12) and an internal diameter (Di16) of the axial shrink-fitting portion (P14, P16, P18, P28, P30) of the element (14, 16, 18, 28, 30) is less than or equal to 50 µm when the element (14, 16, 18, 28, 30) is not coupled to the shaft (12), the external diameter (De12) of the axial shrink-fitting portion (P12, P12A, P12B, P12C) of the shaft (12) being greater than the internal diameter (Di16) of the axial shrink-fitting portion (P14, P16, P18, P28, P30) of the element (14, 16, 18, 28, 30).

2. The assembly according to claim 1, wherein the inner cavity (20, 20A, 20B, 20C) has a length in the axial direction which is greater than or equal to a length of the axial shrink-fitting portion (P12, P12A, P12B, P12C) of the shaft (12).

3. The assembly according to claim 1 or 2, wherein the internal diameter (Di20, Di20A, Di20B, Di20C) of the inner cavity (20, 20A, 20B, 20C) varies in the axial direction.

4. The assembly according to any one of claims 1 to 3, wherein the inner cavity (20) includes a central core (22) of which an external diameter (De22) is smaller than the internal diameter (Di20) of the inner cavity (20).

5. The assembly according to claim 4, comprising a plurality of stiffeners (24) connecting the central core (22) to an interior wall of the inner cavity (20), the stiffeners (24) of the plurality of stiffeners being angularly spaced apart from each other on a regular basis.

6. The assembly according to any one of claims 1 to 5, wherein the element is a first element (14, 28), the axial shrink-fitting portion of the shaft is a first axial shrink-fitting portion of the shaft (P12A) and the inner cavity is a first inner cavity (20A), the assembly comprising a second element (16, 18, 30) configured to be coupled to the shaft (12) by shrink-fitting, the second element (16, 18, 30) including an axial shrink-fitting portion (P16, P18, P30), the shaft (12) comprising a second inner cavity (20B, 20C) in a second axial shrink-fitting portion (P12B, P12C) of the shaft (12), an internal diameter (Di20B, Di20C) of the second inner cavity (20B, 20C) being greater than or equal to 50% of an external diameter (De12) of the second axial shrink-fitting portion (P12B, P12C) of the shaft (12) and a difference between the external diameter (De12) of the second axial shrink-fitting portion (P12B, P12C) of the shaft (12) and an internal diameter of the axial shrink-fitting portion (P16, P18, P30) of the second element (16, 18, 30) being less than or equal to 50 µ m when the second element (16, 18, 30) is not coupled to the shaft (12), the external diameter of the second axial shrink-fitting portion (De12) of the shaft (12) being greater than the internal diameter of the axial shrink-fitting portion (P16, P18, P30) of the second element (16, 18, 30).

7. The assembly according to claim 6, wherein the internal diameter (Di20B, Di20C) of the second inner cavity (20B, 20C) is different from the internal diameter (Di20A) of the first inner cavity (20A).

8. The assembly according to claim 7, wherein the first inner cavity (20A) and the second inner cavity (20B, 20C) are in fluid communication and the shaft (12) includes a transition region (R) between the first inner cavity (20A) and the second inner cavity (20B, 20C) in which the diameter gradually varies from the internal diameter (Di20A) of the first inner cavity (20A) to the internal diameter (Di20B, Di20C) of the second inner cavity (20B, 20C).

9. The assembly according to claim 7 or 8, wherein the shaft (12) includes a blind hole (46) extending along the axial direction, the first inner cavity (20A) and the second inner cavity (20B) being defined in the blind hole (46), the first inner cavity (20A) being disposed between an opening of the blind hole (46) and the second inner cavity (20B) and the internal diameter (Di20A) of the first inner cavity (20A) being smaller than the internal diameter (Di20B) of the second inner cavity (20B).

10. A method for manufacturing an assembly according to any one of claims 1 to 9, the shaft (12) being obtained by additive manufacturing.
